# EUROPÄISCHE PATENTSCHRIFT

(11) **EP 0 993 259 B1**
(45) Veröffentlichungstag und Bekanntmachung des Hinweises auf die Patenterteilung: **18.06.2003**
(21) Anmeldenummer: 99927721.3
(22) Anmeldetag: 23.04.1999
(51) Int. Cl.: A43B 13/26, B29D 31/515

(54) **DÜNNE, FLEXIBLE SCHUH-LAUFSOHLE MIT DURCHGESPRITZTEN TRITTELEMENTEN, VERFAHREN ZUR HERSTELLUNG EINER SOLCHEN LAUFSOHLE UND MIT EINER SOLCHEN LAUFSOHLE VERSEHENER SCHUH**
THIN, FLEXIBLE SHOE OUTSOLE WITH EXTENSIVELY INJECTED TREAD ELEMENTS, METHOD FOR THE PRODUCTION OF SUCH AN OUTSOLE AND SHOE FITTED WITH SAID OUTSOLE
SEMELLE EXTERIEURE DE CHAUSSURE MINCE, SOUPLE, POURVUE D'ELEMENTS DE MARCHE MOULES PAR INJECTION A TRAVERS LA MATIERE, PROCEDE DE PRODUCTION D'UNE TELLE SEMELLE EXTERIEURE, ET CHAUSSURE POURVUE D'UNE TELLE SEMELLE EXTERIEURE

(30) Priorität: 01.05.1998 US 70761
(43) Veröffentlichungstag der Anmeldung: 19.04.2000
(73) Patentinhaber: PUMA Aktiengesellschaft Rudolf Dassler Sport, 91074 Herzogenaurach (DE)
(72) Erfinder: FRAM, Craig, Plaistow, NH 03865 (US)
(74) Vertreter: Gosdin, Michael
(86) Internationale Anmeldenummer: DE9901235
(87) Internationale Veröffentlichungsnummer: WO99056576

(56) Entgegenhaltungen:
- EP-A- 0 217 753
- DE-C- 882 051
- GB-A- 872 540
- US-A- 4 899 467

## Beschreibung

Die vorliegende Erfindung betrifft eine Laufsohle zum Anbringen auf einem weiteren Sohlenteil für Schuhe gemäß dem Oberbegriff des Anspruchs 1 bzw. des Oberbegriffs des sich auf einen Schuh beziehenden Anspruchs 14 bzw. des Oberbegriffs des Verfahrensanspruchs 18.

Der im Oberbegriff der Ansprüche 1, 14 und 18 angegebene Stand der Technik ist bekannt aus der DE-A- 882 051. Ziel der dort offenbarten Erfindung ist die Erhöhung der Verschleißfestigkeit von Ledersohlen. Zu diesem Zweck werden in der Ledersohle Perforationen vorgesehen, in welche Trittelemente aus Kunststoff eingespritzt werden. Diese bilden auf der Außenseite, also auf der Laufseite, Erhöhungen, deren Flächenausdehnung größer ist als der Querschnitt der Perforationsaussparungen. Auf der Gegenseite der Ledersohle, also auf deren Innenseite, erstrecken sich die Einspritzungen in sich erweiternde Aussparungen der Ledersohle, die dort mit der Oberfläche der Innenseite bündig sind. Die Einspritzungen bilden dort praktisch eine Verankerung für die Trittelemente. Die Einspritzungen können auf der Innenseite durch ein Netz aus dem Trittelement-Material verbunden sein. Hierzu sind auf der Innenseite der Ledersohle vertiefte Kanäle ausgespart, die mit dem Trittelement-Material ausgespritzt sind. Daraus ergibt sich eine bestimmte Mindestdicke der Ledersohle.

Die vorliegende Erfindung betrifft eine Laufsohle, die im Gegensatz zu der bekannten Ledersohle eine verschleißfeste Außenseite besitzt, welche mit Trittelementen versehen ist.

Bevorzugt bezieht sich die Erfindung auf Laufsohlen für Sportschuhe, insbesondere für Schuhe für Laufdisziplinen, bei welchen die Sohle eine schockabsorbierende Mittelsohlenschicht besitzt, auf deren Außenseite eine verschleißfeste Lauf sohle mit einer Trittoberfläche angebracht ist. Insbesondere bezieht sich die Erfindung auf Laufsohlen dieser Art, an der Trittelemente an einem dünnen flexiblen Blattmaterial befestigt sind, welches zumindest auf Bereichen der Unterseite der Mittelsohle aufgeklebt ist. Die Erfindung betrifft auch ein Verfahren zur Herstellung einer derartigen Laufsohle.

Für einige Zeit wurden Sportschuhe mit Sohlen hergestellt, die eine schockabsorbierende Mittelsohlenschicht aufwiesen, auf deren Außenseite eine verschleißfeste Laufsohle mit einer

Trittoberfläche angeordnet war. Die Mittelsohle bzw. Mittelsohlenschicht besteht typischerweise aus einem leichtgewichtigen Weichschaum-Material, wie Polyurethan-Schaum mit oder ohne gewichtsreduzierenden und/oder schockabsorbierenden und/oder schockverteilenden Einsätzen, wie beispielsweise Luftblasen, Honigwaben, Gelen, oder dgl.. Andererseits wurden diese Laufsohlen aus hartem, gespritztem Material, beispielsweise aus thermoplastischem Elastomer, wie PVC, synthetischem Gummi oder dgl. geformt. Da derartige Laufsohlenmaterialen relativ steif und schwer sind, wurden Anstrengungen unternommen, in Bereichen der Mittelsohle, die mit der Laufsohle bedeckt sind, Lücken frei zu lassen, beispielsweise im Bereich der Fußwölbung und in Teilen des Absatzes, die normalerweise nicht mit dem Boden in Berührung kommen. Beispielsweise wurden die Laufsohlen mit Zonen erhöhter Flexibilität, wie Abschnitten mit dünneren gewellten Bereichen, in der Zone des Fußballens oder in Gelenkbereichen versehen. All diese Maßnahmen komplizieren jedoch den Herstellungsprozeß, ohne eine Optimierung der Reduzierung des Gewichts der Laufsohle zu erreichen oder den Steifheitseffekt der Laufsohle zu minimieren.

Ein Ziel der vorliegenden Erfindung ist es, Verbesserungen an Laufsohlen für Sportschuhe, insbesondere für Running-Schuhe, vorzusehen, bei denen die Sohle eine schockabsorbierende Mittelsohlenschicht besitzt und bei welchen in wenigstens einem ausgewählten Bereich der Außenseite der Mittelsohlenschicht ein dünnes flexibles Blattmaterial mit seiner Innenseite aufgeklebt ist, auf dessen Außenseite Trittelemente angebracht sind.

Ein weiteres Ziel der Erfindung ist es, Laufsohlen des vorgenannten Typs zu schaffen, die für Schuhe geeignet sind, die größere Trittelemente benötigen als üblicherweise für Laufschuhe notwendig sind (beispielsweise für Cross-Trainings-Schuhe oder für Wanderschuhe) und welche die Optimierung der Muster von Trittelementen mit verschiedenen Trittelementen in verschiedenen Bereichen oder das Anbringen örtlich festgelegter Dekorationen, Handelsmarken oder Gestaltungen auf der Trittoberfläche der Laufsohle ermöglichen.

Ein anderes Ziel der Erfindung ist es, ein Verfahren zur Herstellung derartiger Laufsohlen in Verbindung mit den vorgenannten Zielsetzungen anzugeben, wobei zusätzlich eine Verschwendung von Trittelement-Material auf den benutzten Bereichen des Blattes verhindert werden soll.

Erreicht werden diese Ziele durch die im Kennzeichen des Anspruchs 1 bzw. des Anspruchs 14 bzw. des Anspruchs 18 angegebenen Merkmale.

Diese und weitere Ziele, Merkmale und Vorteile der vorliegenden Erfindung ergeben sich aus der folgenden Beschreibung in Verbindung mit den beigefügten Zeichnungen, die lediglich zu Darstellungszwecken verschiedene Ausführungen der Erfindung zeigen.
- Fig. 1: zeigt in einer Seitenansicht einen Schnitt durch einen Teil eines Laufschuhes (Running-Schuh) gemäß der Erfindung entsprechend der Schnittlinie 1-1 der Fig. 2, wobei die Lauf-sohle im Zungenbereich von der Mittelsohle abgetrennt dargestellt ist;
- Fig. 1A: stellt eine vergrößerte Ansicht des mit einem Kreis umgebenen Details A der Fig. 1 dar;
- Fig. 2: zeigt eine Draufsicht auf die Lauffläche der Laufsohle eines Schuhes gemäß Fig. 1;
- Fig. 3: zeigt eine Spritzgießmaschine zur Anwendung bei dem erfindungsgemäßen Verfahren;
- Fig. 4: zeigt eine Draufsicht auf einen Abschnitt des Grundmaterials, das zum Einsetzen in die Spritzgießmaschine gemäß Fig. 3 vorbereitet ist;
- Fig. 5: zeigt den Abschnitt des Grundmaterials der Fig. 4 nach dem Herausnehmen aus der in der Fig. 3 dargestellten Spritzgießmaschine;
- Fig. 6: zeigt die aus dem Abschnitt der Fig. 5 hergestellte Laufsohle vor dem Anbringen am Schuh der Fig. 1.

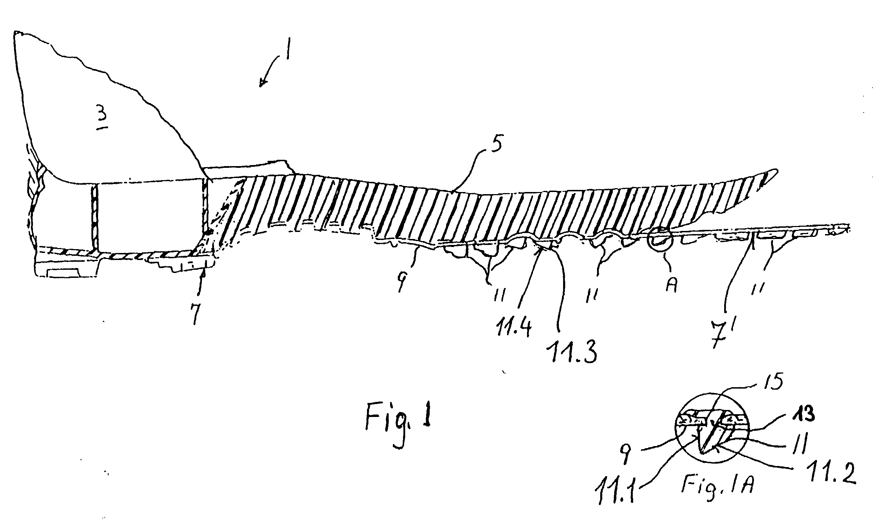

Die Fig. 1 zeigt einen Teil eines Schuhes 1, in diesem Fall eines Sportschuhes für Laufzwecke (Running-Schuh), welcher ein Obermaterial 3 besitzt, das an einer schockabsorbierenden Mittelsohle 5 angebracht ist und der weiterhin eine Außensohle (Laufsohle) 7 mit einer Trittelemente 11 tragenden Oberfläche 7' aufweist. Das Obermaterial 3 und die Mittelsohle 5 können durch eine konventionelle Konstruktion, auch als Einzelteile, hergestellt sein.

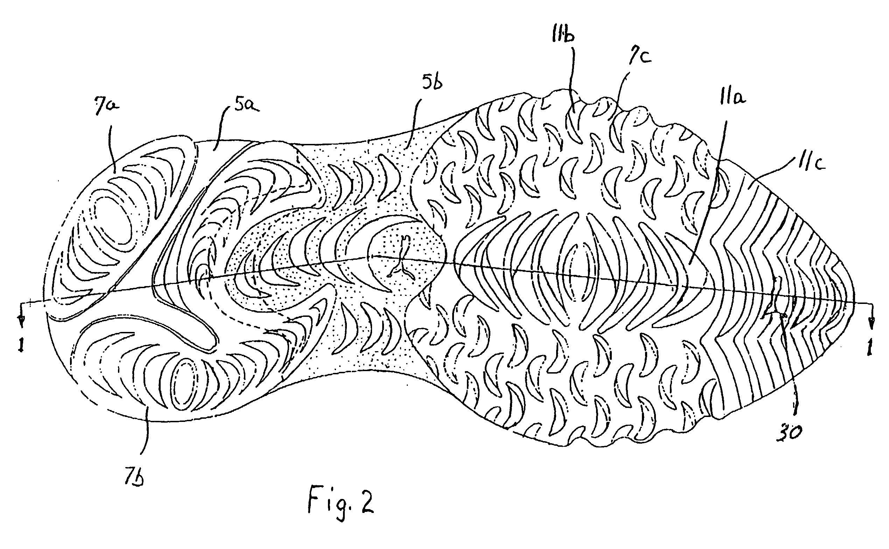

Aus der Fig. 2 ist erkennbar, daß die Laufsohle 7 aus einer Mehrzahl separater Teile hergestellt ist, wobei im vorliegenden Fall Bodenkontaktteile 7a, 7b und 7c vorgesehen sind, während das Material der Mittelsohle im Mittelsohlenteil 5a im Bereich der Ferse und im Mittensohlenteil 5b im Bereich der Fußwölbung nicht mit Bodenkontaktteilen 7a, 7b und 7c bedeckt ist.

Die Bodenkontaktteile 7a und 7b im Fersenbereich besitzen keine Trittelemente 11 und sie sind deshalb in bisheriger Technik für Laufsohlen hergestellt. Jedoch können für solche Schuhe, bei denen hervorstehende Trittelemente 11 auch im Fersenbereich vorgesehen sein sollen, entsprechende Trittelemente 11 vorgesehen sein. Dies gilt auch für andere Bereiche, die gemäß dem vorliegenden Ausführungsbeispiel nicht mit Trittelementen 11 versehen sind.

Im Bodenkontaktteil 7c ist die Laufsohle 7 aus einem dünnen, nicht elastischen, nicht porösen Blattmaterial 9 geformt und auf die Außenseite des Blattmaterials 9 ist eine Vielzahl von Trittelementen 11 aus hartem, verschleißfestem Material durch im Blattmaterial 9 angebrachte Perforationen 13 hindurch in einer noch zu beschreibenden Art eingespritzt. Damit weisen zunächst nur einige der Trittelemente 11 Verankerungsteile 15 auf, die sich von der gegenüberliegenden, oberen Seite des Blattmaterials 9 aus durch die Perforationen 13 hindurch erstrecken. Auf diese Weise wird ein Teil des Blattmaterials 9 rund um die Perforation 13 zwischen dem Trittelement 11 und dem angeformten Verankerungsteil 15 gehalten, wie in Fig. 1A gezeigt ist. Diesbezüglich ist zu bemerken, daß die Abmessungen des Verankerungsteils 15 der Fig. 1A zur besseren Veranschaulichung vergrößert dargestellt sind. Dieses Verankerungsteil 15 ist in Wirklichkeit aber bezüglich Bereich und Dicke relativ klein. Weiterhin ist, wie in Fig. 1A dargestellt, falls das Blattmaterial 9 beispielsweise aus einem Microfaser-Gewebe besteht, dieses örtlich im Bereich zwischen den Trittelementen 11 und den Verankerungsteilen 15 zusammengedrückt.

Eine besonders günstige Ausbildung von Trittelementen 11 besteht darin, daß solche Trittelemente 11, die etwa ab der Mitte des Fußballens oder vor dem Fußballen vorgesehen sind, eine steile Rückenflanke 11.1 und eine flachere Vorderflanke 11.2 besitzen. Dies gestattet beim Antreten einen besonders guten Bodenkontakt.

Weiterhin können vorteilhaft die ab dem Bereich des Fußballens bis etwa zum Beginn der Fußwölbung vorgesehenen Trittelemente 11 eine steile Vorderflanke 11.3 und eine flachere Rückenflanke 11.4 besitzen. Dies gewährleistet einen besseren Bodenkontakt beim Abstoppen aus dem Lauf.

Gemäß einer anderen Ausführungsvariante kann bereits die Mittelsohle 5 oder ein anderes Sohlenteil, auf dem die Laufsohle 7 angebracht wird, Vertiefungen, insbesondere in Form von Querrillen aufweisen, in die das Blattmaterial 9 beim Aufbringen derselben auf diese Sohle bzw. dieses Sohlenteil eingedrückt und eingeklebt wird, wie anhand der Fig. 1 ersichtlich ist.

Während ein bevorzugtes Blattmaterial 9 ein Polyester-Microfaser-Gewebe ist, das mit einem Urethankleber imprägniert ist, können anstelle desselben ein Polyesterfilm, ein Polyesternetz, ein Nylongitter, ein Polyurethanfilm, ein synthetisches Wildleder, ein synthetisches Leder oder andere ähnliche Materialien verwendet werden. Ebenso können verschiedene Materialien für die Trittelemente 11 verwendet werden, beispielsweise thermoplastischer Gummi, thermoplastisches Polyurethan, synthetischer Gummi oder PVC.

Nachfolgend ist ein erfindungsgemäßes Verfahren zur Herstellung einer Laufsohle 7 gemäß der vorliegenden Erfindung beschrieben:

Ein dünnes, flexibles, unelastisches Blattmaterial 9 ist auf einer Seite mit einem Polyurethankleber versehen. Wenn das Blattmaterial 9 von Natur aus porös ist, wie beispielsweise ein Polyester-Microfaser-Gewebe, wird dieses vor dem Aufbringen der Schicht zuerst mit einem solchen Kleber imprägniert, damit es nicht mehr porös ist. Das Blattmaterial 9 wird dann nach einem Muster entsprechend der Größe und der lokalen Anordnung der gewünschten Trittelemente 11 perforiert.

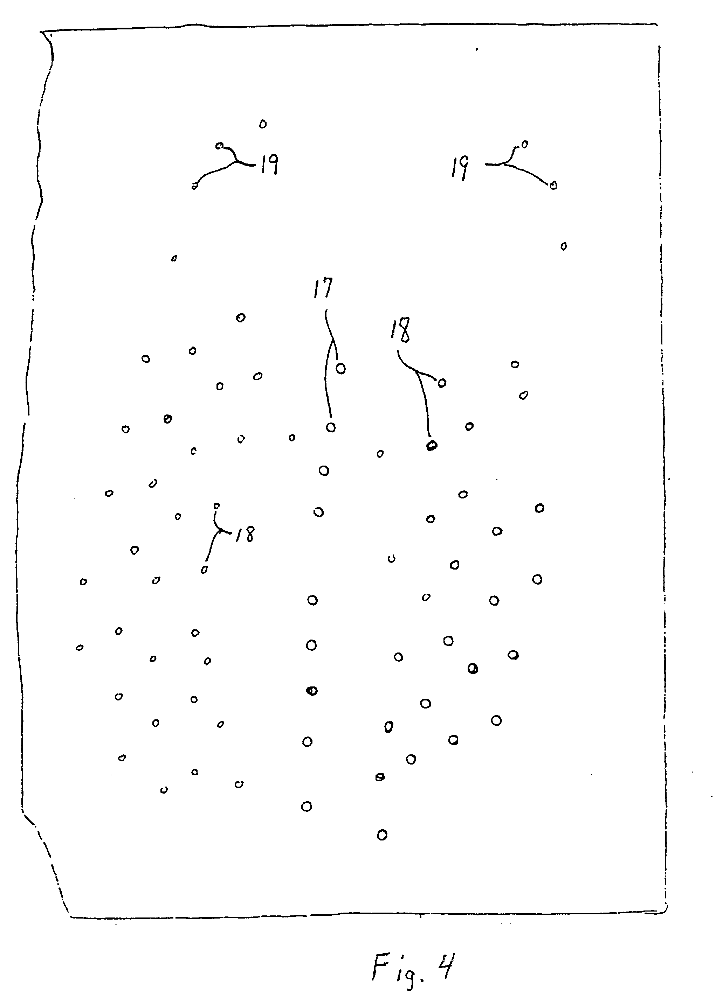

Die Fig. 4 zeigt ein Muster von Perforationen 17, 18, 19, wie dieses zur Herstellung der Laufsohle 7 für den Bodenkontaktteil 7c im Vorderfußbereich des Schuhes 1 vorgesehen ist. Insbesondere sind relativ große Trittelemente 11 im zentralen Bereich hinter dem Zehenbereich vorgesehen (gebildet durch die zentrale Reihe von Perforationen) und relativ kleine Trittelemente 11 sind an den seitlichen und mittleren Seiten des Zentralbereichs vorgesehen (gebildet durch die flankierenden Perforationen 18). Weiter sind Trittelemente 11 im Zehenbereich vorgesehen, die sich über die Breite des Blattmaterials 9 erstrecken (hierfür sind Perforationen 19 an entgegengesetzten Seiten des Bereiches vorgesehen, über die jeweils ein Trittelement 11 geformt ist).

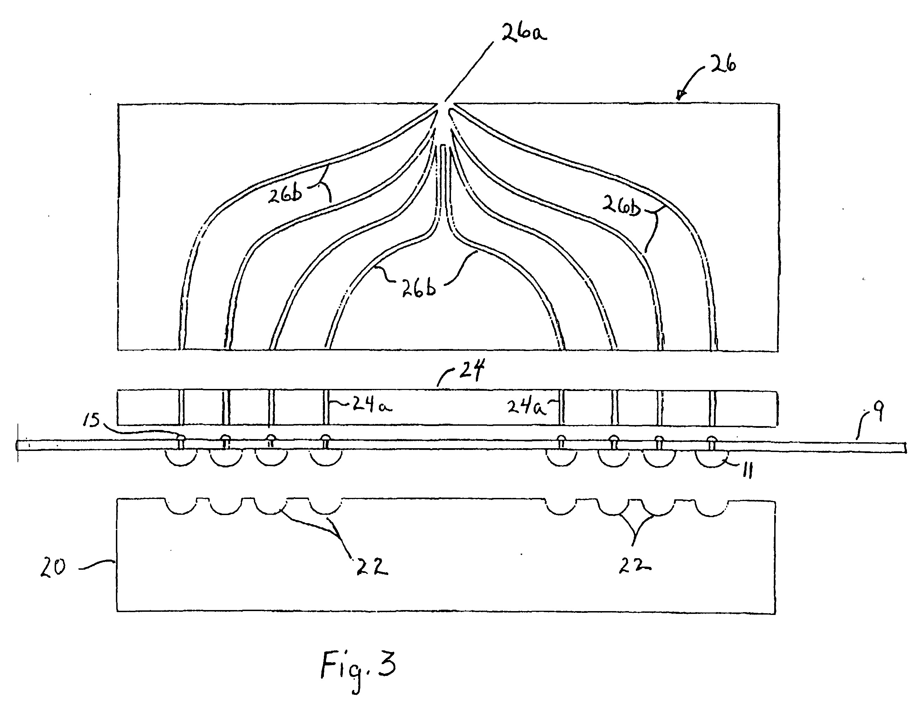

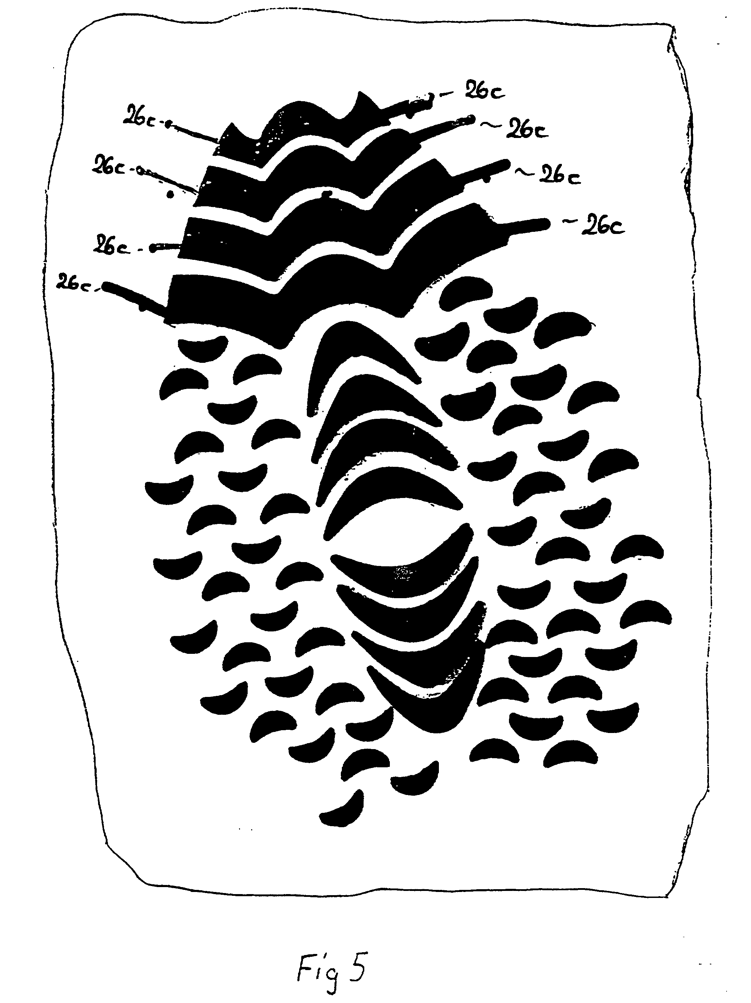

Das perforierte Blattmaterial 9 wird dann über eine Form 20 einer Formmaschine (nicht dargestellt) sicher gehalten, wobei die mit dem Urethankleber versehene Seite des Blattmaterials 9 zur Form 20 hin gerichtet ist und die Perforationen 17, 18 des Blattmaterials 9 über den offenen Enden der die Trittelemente 11 bildenden Aushöhlungen 22 der Form 20 zu liegen kommen, genauso wie bei einer Ejektor- bzw. Auswerferplatte 24, auf deren oberes Ende eine Verteilerplatte 26 für Kunststoff aufgesetzt ist. Dann wird ein Hochdruckinjektor (nicht dargestellt) mit dem Einlaß 26a der Verteilerplatte 26 in Verbindung gebracht und Trittelementen-Material durch die Füllkanäle 26b der VerteilerPlatte 26 und die korrespondierenden Kanäle der Ejektorplatte 24 sowie durch die Perforationen in die Aushöhlungen 22 gespritzt. Im Falle der Trittelemente 7c, die sich quer über die gesamte Sohle erstrecken, verlaufen Verbindungsspritzkanäle von entgegengesetzten Enden der zugeordneten Aushöhlungen 22 zu den zugehörigen Perforationen, wie anhand der Spritzangüsse 26c in Fig. 5 gezeigt ist. Unter der Hitze des Spritzprozesses erweicht die Schicht aus Urethankleber und beim Abkühlen des Trittelementmaterials werden die betreffenden Trittelemente 11 über den Urethankleber am Blattmaterial 9 befestigt. Im Falle sehr großer Trittelemente 7c sorgt der Kleber infolge des großen Bereichs der Klebeflächen für eine genügend hohe Festigkeit der Verbindung, wogegen die Klebebefestigung der kleineren Trittelemente 11 durch solche Trittelemente 11a, 11b verstärkt ist, die mit Verankerungsteilen 15 versehen sind, welche sich von den Trittelementen 11a, 11b durch die Perforationen 17, 18 zur gegenüberliegenden zweiten Seite des Blattmaterials 9 erstrecken, so daß ein Teil des Blattmaterials 9 rund um die Perforationen 17, 18 zwischen den Trittelementen 11 und den Verankerungsteilen 15 gehalten wird, wie anhand der Fig. 1A gezeigt und oben beschrieben ist. Beim Bewegen der Form 22, der Ejektorplatte 24 und der Verteilerplatte 26 in die in Fig. 3 dargestellte Position wird das Blattmaterial 9 mit den darauf befindlichen Trittelementen 11 von der Formmaschine ausgeworfen und die Angußteile werden von den Verankerungsteilen 15 abgetrennt.

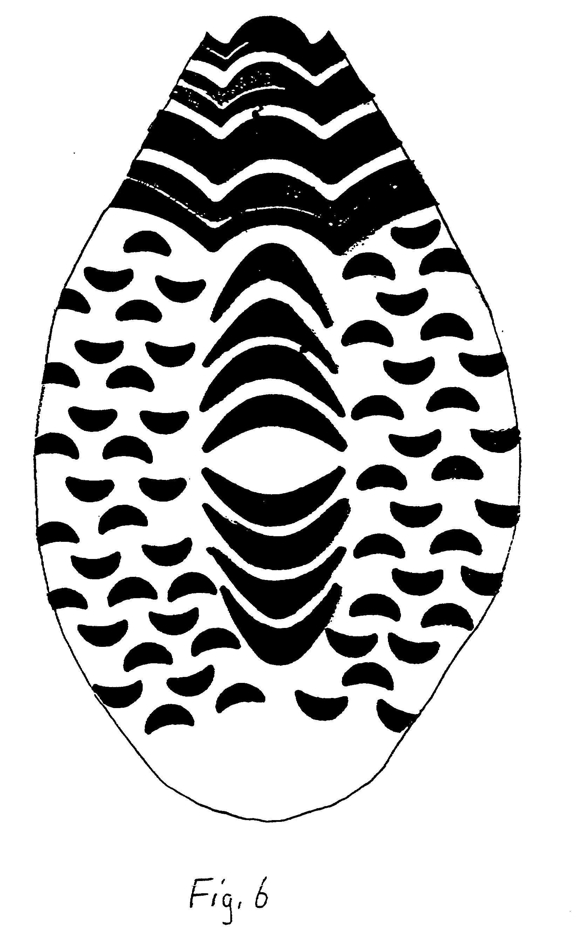

Das Blattmaterial 9, wie es aus der Form (Fig. 5) entnommen wird, wird in eine perimetrische, das heißt umfangsmäßige Form gebracht, die derjenigen der Sohlenoberfläche entspricht, auf der das Blatt angeordnet werden soll (Fig. 6). Mit dieser Maßgabe kann ein gegebenes Trittelement-Muster üblicherweise für etwa drei aufeinanderfolgende Schuhgrößen mit nur minimalem Verlust verwendet werden, weil höchstens Teile des äußersten Teils der Trittelemente 11b und der Endteile der sich über die Breite erstreckenden Trittelemente 11c abgetrennt werden und dort zu Abfall werden, wogegen der Rest des als Abfall anfallenden Blattmaterials 9 frei von Trittelementen 11 ist.

Das gezeigte spezielle Trittelement-Muster ist nur als ein demonstratives Beispiel von Typen von Trittelementen und Kombinationen von Trittelementen zu betrachten, die angewendet werden können.

Die vorliegende Erfindung kann in einem weiten Bereich von Trittelementen oder Trittflächen nach Typ, Größe und Gestaltung angewendet werden, die an Einzel-Laufsohlen angebracht werden und es ermöglichen, auch dekorative Muster oder Handelsmarken (Warenzeichen) im Auftretbereich zu erzeugen. Weiterhin können, obwohl nur ein geformtes Muster einer Einzel-Laufsohle dargestellt ist, gesonderte Linksund Rechts-Muster gleichzeitig für ein oder mehrere Paar(e) von Schuhen geformt werden.

Nachdem die Laufsohlen auf Größe geschnitten sind, wird eine Schicht aus Urethankleber auf die den Trittelementen 11 gegenüberliegende zweite Seite des Blattes 9 aufgebracht, die Mittelsohle 5 an die den Kleber tragende Seite des Blattes 9 angesetzt und beide in dieser Lage erhitzt, beispielsweise indem sie durch einen Hitzetunnel geführt werden, um die Verbindung der Laufsohle mit der Mittelsohle 5 zu bewirken. Anschließend wird das Schuhobermaterial 3 an der Mittelsohle 5 in einer bekannten Art befestigt.

Darauf hinzuweisen ist, daß die vorliegende Erfindung nicht auf Laufschuhe (Running-Schuhe) oder auf Schuhe mit Mittelsohlen beschränkt ist. So kann das die Trittelemente 11 tragende Blatt 9, welches die Laufsohle gemäß der vorliegenden Erfindung bildet, auch bei Cross-Trainings-Schuhen oder anderen Arten von Sportschuhen, einschließlich Wanderschuhen, verwendet werden.

Es sind verschiedene Ausführungsmöglichkeiten in Verbindung mit der vorliegenden Erfindung dargestellt und beschrieben worden. Es versteht sich jedoch, daß die Erfindung nicht auf diese Ausführungsmöglichkeiten beschränkt ist, sondern vielen anderen Änderungen oder Modifikationen zugänglich ist, wie sie der Fachmann kennt. Deshalb ist die Erfindung nicht auf die dargestellten und beschriebenen Details beschränkt; vielmehr schließt sie auch alle Änderungen und Modifikationen ein, wie sie vom Umfang der Ansprüche umfaßt werden.

## Patentansprüche

1. Laufsohle (7) zum Anbringen auf einem weiteren Sohlenteil (5) für Schuhe (1), mit einer auf ihrer Trittoberfläche vorgesehenen Vielzahl von Trittelementen (11) aus verschleißfestem Material, wobei die Trittelemente (11) an die Trittoberfläche dadurch angeformt sind, daß die Laufsohle (7) ein Muster aus durch diese hindurchgehenden Perforationen (13; 17, 18, 19) aufweist und Trittelemente (11) in die Perforationen (13; 17, 18, 19) eingeformt und dadurch sicher gehalten sind, daß sie auf der Laufseite der Sohle (7) flächenmäßig größer sind als der Querschnitt der jeweiligen zugeordneten Perforationen (13; 17, 18, 19) und daß sie durch die Perforationen (13; 17, 18, 19) bis auf die Gegenseite der Laufsohle (7) hindurchgreifen und dort über den Querschnitt der Perforationen (13; 17, 18, 19) hinausgehende Verankerungsteile (15) besitzen, **gekennzeichnet durch** folgende Merkmale:
1) die Laufsohle (7) besteht aus einem
a) dünnen,
b) flexiblen,
c) nicht porösen und
d) nicht elastischen Blattmaterial (9) ;
2) die Trittelemente (11) bestehen aus hartem Material;
3) die Laufsohle (7) ist aus dem Blattmaterial (9) in der Größe der Außenform der Oberfläche einer Schuhsohle oder einer Sohlenlage eines herzustellenden Schuhes (1), mit der sie verbunden werden soll, herausgetrennt.

2. Laufsohle nach Anspruch 1, **dadurch gekennzeichnet, daß** die Trittelemente (11a, 11b, 11c) in wenigstens einem Bereich des Blattmaterials (9) von Trittelementen (11a, 11b, 11c) in wenigstens einem anderen Bereich des Blattmaterials (9) verschieden sind.

3. Laufsohle nach Anspruch 2, **dadurch gekennzeichnet, daß** sich die verschiedenen Trittelemente (11a, 11b, 11c) in ihrer Größe unterscheiden.

4. Laufsohle nach Anspruch 2, **dadurch gekennzeichnet, daß** sich die verschiedenen Trittelemente (11a, 11b, 11c) in ihrer Gestalt unterscheiden.

5. Laufsohle nach einem der Ansprüche 1 bis 4, **dadurch gekennzeichnet, daß** die im Bereich der Zehen vorgesehenen Trittelemente (11c) sich über die Breite der Laufsohle (7) erstrecken.

6. Laufsohle nach einem der Ansprüche 1 bis 5, **dadurch gekennzeichnet, daß** im Bereich des Vorderfußes hinter dem Bereich der Zehen in einem zentralen Bereich große Trittelemente (lla) und seitlich und medial zum zentralen Bereich relativ kleine Trittelemente (11b) vorgesehen sind.

7. Laufsohle nach einem der Ansprüche 1 bis 6, **dadurch gekennzeichnet, daß** das Blattmaterial (9) aus einem mit Urethan imprägnierten Microfasergewebe aus Polyester besteht.

8. Laufsohle nach einem der Ansprüche 1 bis 7, **dadurch gekennzeichnet, daß** das Blattmaterial (9) auf der Seite der Trittelemente (11) eine Beschichtung aus Urethankleber aufweist.

9. Laufsohle nach einem der Ansprüche 1 bis 8, **dadurch gekennzeichnet, daß** die Trittelemente (11) aus einem Material bestehen, das aus der Gruppe von Materialien aus thermoplastischem Gummi, thermoplastischem Polyurethan, synthetischem Gummi oder PVC ausgewählt ist.

10. Laufsohle nach einem der Ansprüche 1 bis 9, **dadurch gekennzeichnet, daß** das Blattmaterial (9) aus einem Material besteht, das aus der Gruppe von Polyesterfilm, Polyesternetz, Nylongitter, Polyurethanfilm, synthetischem Wildleder oder synthetischem Leder ausgewählt ist.

11. Laufsohle nach einem der Ansprüche 1 bis 10, **dadurch gekennzeichnet, daß** die vor dem Ballen oder vor der Ballenmitte vorgesehenen Trittelemente (11) eine steile Rückflanke und eine flachere Vorderflanke (Fig. 1A) besitzen.

12. Laufsohle nach einem der Ansprüche 1 bis 10, **dadurch gekennzeichnet, daß** die im Bereich des Ballens bis zum Beginn der Fußwölbung vorgesehenen Trittelemente (11) eine steile Vorderflanke und eine flachere Rückflanke besitzen.

13. Laufsohle nach einem der Ansprüche 1 bis 12, **dadurch gekennzeichnet, daß** die Sohlenschicht, insbesondere eine Mittelsohle (5), an welcher die Laufsohle (7) befestigt ist, Vertiefungen, insbesondere in Form von Rillen aufweist, in die die Laufsohle (7) eingedrückt und eingeklebt ist.

14. Schuh (1) mit einem Obermaterial und einer Außensohle, die eine Laufsohle (7) mit einer auf ihrer Trittoberfläche vorgesehenen Vielzahl von Trittelementen (11) aus verschleißfestem Material besitzt, wobei die Trittelemente (11) an die Trittoberfläche der Laufsohle (7) dadurch angeformt sind, daß die Laufsohle (7) ein Muster aus durch diese hindurchgehenden Perforationen (13; 17, 18, 19)aufweist und die Trittelemente (11) in die Perforationen (13; 17, 18, 19) eingeformt und dadurch sicher gehalten sind, daß sie auf der Laufseite der Sohle flächenmäßig größer sind als der Querschnitt der jeweiligen zugeordneten Perforationen (13; 17, 18, 19) und daß sie durch die Perforationen (13; 17, 18, 19) bis auf die Gegenseite der Laufsohle (7) hindurchgreifen und dort Verankerungsteile (15) besitzen, nach einem der Ansprüche 2 bis 13, **gekennzeichnet durch** folgende Merkmale:
1) die Laufsohle (7) besteht aus einem
a) dünnen,
b) flexiblen,
c) nicht porösen und
d) nicht elastischen Blattmaterial (9);
2) die Trittelemente (11) bestehen aus hartem Material;
3) die Laufsohle (7) ist aus dem Blattmaterial (9) in der Größe der Außenform der Oberfläche der Außensohle des Schuhes (1), mit der sie verbunden ist, herausgetrennt.

15. Schuh nach Anspruch 14, **dadurch gekennzeichnet, daß** er eine Mittelsohle (5) aufweist, auf der die Laufsohle (7) angebracht, insbesondere aufgeklebt ist.

16. Schuh nach Anspruch 15, **dadurch gekennzeichnet, daß** der Kleber aus einem Urethankleber besteht.

17. Schuh nach einem der Ansprüche 14 bis 16, **dadurch gekennzeichnet, daß** die Mittelsohle aus schockabsorbierendem Material besteht.

18. Verfahren zur Herstellung einer Laufsohle (7) zum Anbringen auf einem weiteren Sohlenteil (5) für Schuhe (1), mit einer auf ihrer Trittoberfläche vorgesehenen Vielzahl von Trittelementen (11) aus verschleißfestem Material, wobei die Trittelemente (11) an die Trittoberfläche dadurch angeformt werden, daß die Laufsohle (7) zunächst mit einem Muster aus durch diese hindurchgehenden Perforationen (13; 17, 18, 19) versehen werden und nach Einlegen in eine angepaßte Spritzgießform (20) und Schließen derselben in die Perforationen (13; 17, 18, 19) Trittelement-Material derart eingespritzt wird, daß auf der Laufseite Trittelemente (11) und auf der Gegenseite der Laufsohle (7) Verankerungselemente (15) geformt werden, die flächenmäßig größer sind als der Querschnitt der jeweiligen zugeordneten Perforationen (13; 17, 18, 19) beträgt, nach einem der Ansprüche 2 bis 13, **gekennzeichnet durch** folgende Verfahrensschritte:
1) für die Laufsohle (7) wird ein Blattmaterial (9) in eine Spritzgießmaschine eingelegt, welches
a) dünn,
b) flexibel,
c) nicht porös und
d) nicht elastisch ist;
2) nach dem Schließen der Spritzgießform (20) wird als Trittelement-Material hartes Material eingespritzt, wobei die Perforationen (17,18,19) über zugeordnete Öffnungen von in der Form (20) vorgesehenen Aushöhlungen (22) zum Formen der Trittelemente (11) gebracht werden;
3) nach dem Öffnen der Spritzgießform (20) und dem Entnehmen des mit den Trittelementen (11) und den Verankerungselementen (15) versehenen Blattmaterials (9) wird das Blattmaterial (9) in einer solchen Außenform beschnitten, daß diese Außenform der äußeren Form der Oberfläche einer Schuhsohle entspricht, auf welcher es als Laufsohle (7) angebracht wird.

19. Verfahren nach Anspruch 18, **dadurch gekennzeichnet, daß** nach dem Beschneiden in einem weiteren Verfahrensschritt ein Kleber, insbesondere ein Urethankleber, auf die zweite Seite des Blattmaterials (9) aufgebracht wird und die zweite Seite auf eine andere Sohlenschicht aufgeklebt wird.

20. Verfahren nach Anspruch 19, **dadurch gekennzeichnet, daß** für die andere Sohlenschicht eine insbesondere schockabsorbierende Mittelsohle (5) verwendet wird.

21. Verfahren nach einem der Ansprüche 18 bis 20, **dadurch gekennzeichnet, daß** vor dem Anbringen der Perforationen (17, 18, 19) zumindest die erste Seite des Blattmaterials (9) mit einem Urethankleber beschichtet wird.

22. Verfahren nach einem der Ansprüche 18 bis 21, **dadurch gekennzeichnet, daß** Trittelemente (11c), welche sich über die Breite der Laufsohle (7) erstrecken, durch Spritzen von Trittelement-Material in die jeweiligen Aushöhlungen von einander gegenüberliegenden Seiten aus über in der Spritzgußform vorgesehene Spritzgußkanäle vorgenommen wird.

23. Verfahren nach einem der Ansprüche 18 bis 22, **dadurch gekennzeichnet, daß** die Trittelemente (11) in einer derarigen Gesamtanordnung vorgesehen werden, daß diese Anordnung mit der Sohlenoberfläche, an welcher die Laufsohle (7) befestigt werden soll, konform ist, so daß als Resultat beim Beschneiden ein Minimum an Abfall anfällt.

## Claims

1. An outsole (7) for attachment to another sole part (5) for shoes (1), comprising a plurality of tread elements (11) provided on the tread surface thereof and made of wear-resistant material, the tread elements (11) being moulded to the tread surface by the outsole (7) having a pattern of perforations (13; 17, 18, 19) passing through the said outsole and tread elements (11) being moulded into the perforations (13; 17, 18, 19) and being securely held by the fact that they are larger in terms of area on the tread side of the sole (7) than the cross-section of the respective perforations (13; 17, 18, 19) associated therewith, and that they extend through the perforations (13; 17, 18, 19) to the opposite side of the outsole (7) and there have anchorage parts (15) extending beyond the cross-section of the perforations (13; 17, 18, 19), **characterised by** the following features:
1) the outsole (7) is made of a
a) thin,
b) flexible,
c) non-porous and
d) non-elastic laminar material (9);
2) the tread elements (11) are made of hard material;
3) the outsole (7) is cut out of the laminar material (9) to the size of the outer shape of the surface of a shoe sole or a sole layer of a shoe (1) to be produced, to which sole or sole layer it is to be joined.

2. An outsole according to Claim 1, **characterised in that** that the tread elements (11a, 11b, 11c) in at least one region of the laminar material (9) are different from tread elements (11a, 11b, 11c) in at least one other region of the laminar material (9).

3. An outsole according to Claim 2, **characterised in that** the various tread elements (11a, 11b, 11c) differ in their size.

4. An outsole according to Claim 2, **characterised in that** the various tread elements (11a, 11b, 11c) differ in their shape.

5. An outsole according to one of Claims 1 to 4, **characterised in that** the tread elements (11c) provided in the region of the toes extend over the width of the outsole (7).

6. An outsole according to one of Claims 1 to 5, **characterised in that** in the region of the forefoot behind the region of the toes, large tread elements (11a) are provided in a central region, and relatively small tread elements (11b) are provided laterally and medially of the central region.

7. An outsole according to one of Claims 1 to 6, **characterised in that** the laminar material (9) is composed of a polyester microfibre fabric impregnated with urethane.

8. An outsole according to one of Claims 1 to 7, **characterised in that** the laminar material (9) has a coating of urethane adhesive on the side of the tread elements (11).

9. An outsole according to one of Claims 1 to 8, **characterised in that** the tread elements (11) are made of a material selected from the group of materials made of thermoplastic rubber, thermoplastic polyurethane, synthetic rubber or PVC.

10. An outsole according to one of Claims 1 to 9, **characterised in that** the laminar material (9) consists of a material selected from the group of polyester film, polyester webbing, nylon mesh, polyurethane film, synthetic suede leather or synthetic leather.

11. An outsole according to one of Claims 1 to 10, **characterised in that** the tread elements (11) provided in front of the ball of the foot or in front of the centre of the ball of the foot have a steep rear side and a flatter front side (Fig. 1A).

12. An outsole according to one of Claims 1 to 10, **characterised in that** the tread elements (11) provided in the region of the ball of the foot to the beginning of the foot arch have a steep front side and a flatter rear side.

13. An outsole according to one of Claims 1 to 12, **characterised in that** the sole layer, more particularly a midsole (5), to which the outsole (7) is attached has depressions, more particularly in the form of grooves, into which the outsole (7) is pressed and glued in place.

14. A shoe (1) comprising an upper and an outer sole which has an outsole (7) comprising a plurality of tread elements (11) provided on the tread surface thereof and made of wear-resistant material, the tread elements (11) being moulded to the tread surface of the outsole (7) by the outsole (7) having a pattern of perforations (13; 17, 18, 19) passing through the said outsole and the tread elements (11) being moulded into the perforations (13; 17, 18, 19) and being securely held by the fact that they are larger in terms of area on the tread side of the sole than the cross-section of the respective perforations (13; 17, 18, 19) associated therewith, and that they extend through the perforations (13; 17, 18, 19) to the opposite side of the outsole (7) and there have anchorage parts (15), according to one of Claims 2 to 13, **characterised by** the following features:
1) the outsole (7) is made of a
a) thin,
b) flexible,
c) non-porous and
d) non-elastic laminar material (9);
2) the tread elements (11) are made of hard material;
3) the outsole (7) is cut out of the laminar material (9) to the size of the outer shape of the surface of the outer sole of the shoe (1) to which it is joined.

15. A shoe according to Claim 14, **characterised in that** it has a midsole (5) to which the outsole (7) is attached, more particularly glued.

16. A shoe according to Claim 15, **characterised in that** the adhesive is composed of a urethane adhesive.

17. A shoe according to one of Claims 14 to 16, **characterised in that** the midsole is made of shock-absorbing material.

18. A method for making an outsole (7) for attachment to another sole part (5) for shoes (1), comprising a plurality of tread elements (11) provided on the tread surface thereof and made of wear-resistant material, the tread elements (11) being moulded to the tread surface by the outsole (7) first being provided with a pattern of perforations (13; 17, 18, 19) passing through the said outsole and, after the placing thereof in an adapted injection mould (20) and closing of the same, the tread element material being injected into the perforations (13; 17, 18, 19) such that tread elements (11) are moulded on the tread side and anchorage elements (15) on the opposite side of the outsole (7) which are larger in terms of area than the cross-section of the respective perforations (13; 17, 18, 19) associated therewith, according to one of Claims 2 to 13, **characterised by** the following method steps:
1) to make the outsole (7), a laminar material (9) is placed in an injection moulding machine, which material is
a) thin,
b) flexible,
c) non-porous and
d) non-elastic;
2) after the closing of the injection mould (20), hard material is injected as the tread element material, the perforations (17, 18, 19) being brought so as to lie over associated openings of recesses (22) provided in the mould (20) for moulding the tread elements (11);
3) after the opening of the injection mould (20) and the removal of the laminar material (9) provided with the tread elements (11) and the anchorage elements (15), the laminar material (9) is trimmed to an outer shape such that this outer shape corresponds to the exterior shape of the surface of a shoe sole to which it is applied as the outsole (7).

19. A method according to Claim 18, **characterised in that** after trimming, in a further method step an adhesive, more particularly a urethane adhesive, is applied to the second side of the laminar material (9) and the second side is glued to another sole layer.

20. A method according to Claim 19, **characterised in that** a shock-absorbing midsole (5) in particular is used for the other sole layer.

21. A method according to one of Claims 18 to 20, **characterised in that** before the perforations (17, 18, 19) are made therein, at least the first side of the laminar material (9) is coated with a urethane adhesive.

22. A method according to one of Claims 18 to 21, **characterised in that** tread elements (11c) which extend over the width of the outsole (7) are made by injecting tread element material into the respective recesses from mutually opposite sides via injection moulding ducts provided in the injection mould.

23. A method according to one of Claims 18 to 22, **characterised in that** the tread elements (11) are provided in an overall arrangement such that this arrangement corresponds to the sole surface to which the outsole (7) is to be attached, so that as a result a minimum of wastage is obtained in the trimming process.

## Revendications

1. Semelle d'usure (7) à appliquer sur une autre partie de semelle (5) pour des chaussures (1), avec un grand nombre d'éléments portants (11) prévus sur sa surface portante et constitués d'un matériau résistant à l'usure, les éléments portants (11) étant formés sur la surface portante de sorte que la semelle d'usure présente un motif composé de perforations (13; 17, 18, 19) qui traversent celle-ci, et dont des éléments portants (11) sont moulés dans les perforations (13 ; 17, 18, 19) et maintenus en place de telle sorte qu'ils ont sur le côté d'usure de la semelle une surface plus grande que la section transversale des perforations (13 ; 17, 18, 19) respectivement associées, et qu'ils traversent les perforations (13 ; 17, 18, 19) pour parvenir sur le côté opposé de la semelle d'usure et y possèdent des parties d'ancrage (15) qui dépassent la section transversale des perforations (13 ; 17, 18, 19),
**caractérisée par**
les spécifications suivantes :
1) la semelle d'usure est en un matériau en feuille (9)
a) mince,
b) flexible,
c) non poreux et
d) non élastique,
2) les éléments portants (11) sont en un matériau dur,
3) la semelle d'usure (7) est extraite du matériau en feuille (9) dans la dimension de la forme extérieure de la surface d'une semelle de chaussure ou d'une couche de semelle d'une chaussure (1) à fabriquer et à laquelle elle doit être liée.

2. Semelle d'usure selon la revendication 1,
**caractérisée en ce que** les éléments portants (11a, 11b, 11c) dans au moins une zone du matériau en feuille (9) sont différents des éléments portants (11a, 11b, 11c) dans au moins une autre zone du matériau en feuille (9).

3. Semelle d'usure selon la revendication 2,
**caractérisée en ce que** les différents éléments portants (11a, 11b, 11c) sont différents quant à leur dimension.

4. Semelle d'usure selon la revendication 2,
**caractérisée en ce que** les différents éléments portants (11a, 11b, 11c) sont différents quant à leur structure.

5. Semelle d'usure selon l'une des revendications 1 à 4,
**caractérisée en ce que** les éléments portants (11c) prévus dans la zone des orteils s'étendent sur la largeur de la semelle d'usure (7).

6. Semelle d'usure selon l'une des revendications 1 à 5,
**caractérisée en ce que** dans la zone du métatarse à l'arrière de la zone des orteils on prévoit de grands éléments portants (11a) dans une zone centrale et des éléments portants (11b) relativement petits en disposition latérale et médiane par rapport à la zone centrale.

7. Semelle d'usure selon Tune des revendications 1 à 6,
**caractérisée en ce que** le matériau en feuille (9) est constitué d'un tissu de microfibres en polyester imprégnées d'uréthane.

8. Semelle d'usure selon l'une des revendications 1 à 7,
**caractérisée en ce que** le matériau en feuille (9) présente un revêtement en matière adhésive uréthanique sur le côté des éléments portants (11).

9. Semelle d'usure selon l'une des revendications 1 à 8,
**caractérisée en ce que** les éléments portants (11) sont en un matériau qui est choisi parmi le groupe de matériaux suivants : le caoutchouc thermoplastique, le polyuréthane thermoplastique, le caoutchouc synthétique ou le PVC.

10. Semelle d'usure selon l'une des revendications 1 à 9,
**caractérisée en ce que** le matériau en feuille (9) est en un matériau qui est choisi parmi le groupe de matériaux suivants : film de polyester, réseau de polyester, grille de nylon, film de polyuréthane, peau synthétique ou cuir synthétique.

11. Semelle d'usure selon l'une des revendications 1 à 10,
**caractérisée en ce que** les éléments portants (11) prévus devant l'éminence ou devant le milieu de l'éminence possèdent un flanc arrière abrupt et un flanc avant plus plat (figure lA).

12. Semelle d'usure selon l'une des revendications 1 à 10,
**caractérisée en ce que** les éléments portants (11) prévus dans la zone de l'éminence jusqu'au début de la cambrure du pied possèdent un flanc avant abrupt et un flanc arrière plus plat.

13. Semelle d'usure selon l'une des revendications 1 à 12,
**caractérisée en ce que** la couche de semelle, en particulier une semelle médiane (5) à laquelle est fixée la semelle d'usure (7), présente des renfoncements, en particulier sous forme de cannelures, dans lesquels la semelle d'usure (7) est pressée et collée.

14. Chaussure (1) avec un matériau supérieur et une semelle extérieure qui possède une semelle d'usure (7) avec un grand nombre d'éléments portants (11) prévus sur sa surface portante et constitués d'un matériau résistant à l'usure, les éléments portants (11) étant formés sur la surface portante de la semelle d'usure de sorte que la semelle d'usure (7) présente un motif composé de perforations (13 ; 17, 18, 19) qui traversent celle-ci, et dont des éléments portants (11) moulés dans les perforations (13 ; 17, 18, 19) sont maintenus en place de telle sorte qu'ils ont sur le côté d'usure une surface plus grande que la section transversale des perforations (13; 17, 18, 19) respectivement associées et qu'ils traversent les perforations (13 ; 17, 18, 19) pour parvenir sur le côté opposé de la semelle d'usure et y possèdent des parties d'ancrage (15) qui dépassent la section transversale des perforations (13 ; 17, 18, 19), selon l'une des revendications 2 à 13,
**caractérisée par** les spécifications suivantes :
1) la semelle d'usure est en un matériau en feuille (9)
a) mince,
b) flexible,
c) non poreux et
d) non élastique,
2) les éléments portants (11) sont en un matériau dur, et
3) la semelle d'usure (7) est extraite du matériau en feuille (9) dans la dimension de la forme extérieure de la surface d'une semelle de chaussure ou d'une couche de semelle d'une chaussure (1) à fabriquer et à laquelle elle doit être liée.

15. Chaussure selon la revendication 14,
**caractérisée en ce qu'** elle présente une semelle médiane (5) sur laquelle la semelle d'usure (7) est appliquée, en particulier collée.

16. Chaussure selon la revendication 15,
**caractérisée en ce que** la colle consiste en une colle uréthanique.

17. Chaussure selon l'une des revendications 14 à 16,
**caractérisée en ce que** la semelle médiane est en un matériau qui absorbe les chocs.

18. Procédé pour fabriquer une semelle d'usure (7) destinée à l'application sur une autre partie de semelle (5) pour des chaussures (1), avec un grand nombre d'éléments portants (11) prévus sur sa surface portante et constitués d'un matériau résistant à l'usure, les éléments portants (11) étant formés sur la surface portante de sorte que la semelle d'usure (7) est d'abord munie d'un motif composé de perforations (13 ; 17, 18, 19) qui traversent celle-ci et, après insertion dans un moule de moulage par injection (20) adapté et après avoir fermé celui-ci, le matériau d'élément portant est injecté dans les perforations (13 ; 17, 18, 19) de telle manière que sur le côté de marche sont formés des éléments portants (11) et sur le côté opposé de la semelle d'usure des éléments d'ancrage (15) qui ont une surface plus grande que la section transversale des perforations (13 ; 17, 18, 19) à chaque fois associées, selon l'une des revendications 2 à 13,
**caractérisé par** les étapes de procédé suivantes :
1) pour la semelle d'usure on insère dans une machine de moulage par injection un matériau en feuille (9) qui est
a) mince,
b) flexible,
c) non poreux et
d) non élastique,
2) après la fermeture du moule de moulage par injection (20), on injecte en tant que matériau d'élément portant un matériau dur, les perforations (17, 18, 19) étant placées pour former les éléments portants (11) au-dessus d'ouvertures associées de cavités (22) prévues dans le moule (20) ;
3) après l'ouverture du moule de moulage par injection (20) et après le retrait du matériau en feuille (9) muni des éléments portants (11) et des éléments d'ancrage (15), le matériau en feuille (9) est coupé selon une forme extérieure telle que cette forme extérieure correspond à la forme de l'extérieur de la surface d'une semelle de chaussure sur laquelle il est appliqué en tant que semelle d'usure.

19. Procédé selon la revendication 18,
**caractérisé en ce qu'** après la coupe dans une autre étape de procédé une colle, en particulier une colle uréthanique, est appliquée sur le deuxième côté du matériau en feuille (9) et le deuxième côté est collé sur une autre couche de semelle.

20. Procédé selon la revendication 19,
**caractérisé en ce que** pour l'autre couche de semelle on utilise une semelle médiane (5) qui absorbe particulièrement les chocs.

21. Procédé selon Tune des revendications 18 à 20,
**caractérisé en ce qu'** avant d'effectuer les perforations (17, 18, 19) au moins le premier côté du matériau en feuille (9) est revêtu d'une colle uréthanique.

22. Procédé selon l'une des revendications 18 à 21,
**caractérisé en ce que** des éléments portants (11c) qui s'étendent sur la largeur de la semelle d'usure (7) sont réalisés par injection du matériau d'élément portant dans chacune des cavités en partant des côtés qui sont opposés l'un à l'autre au moyen de canaux de moulage par injection prévus dans le moule de moulage par injection.

23. Procédé selon l'une des revendications 18 à 22,
**caractérisé en ce que** les éléments portants (11) sont prévus selon un arrangement d'ensemble tel que cet arrangement est conforme à la surface de semelle à laquelle doit être fixée la semelle d'usure (7) de sorte qu'il en résulte un minimum de chutes lors de la coupe.
